Europäisches Patentamt

European Patent Office

Office européen des brevets

(19)

(11) Numéro de publication: **0 254 309 B1**

(12) **FASCICULE DE BREVET EUROPEEN**

(45) Date de publication de fascicule du brevet:
10.04.91

(51) Int. Cl.⁵: **H04Q 1/06**

(21) Numéro de dépôt: 87110680.3

(22) Date de dépôt: 23.07.87

(54) **Dispositif de maintien multiple notamment pour des faisceaux de fils dans un central téléphonique.**

(30) Priorité: 25.07.86 FR 8610808

(43) Date de publication de la demande:
27.01.88 Bulletin 88/04

(45) Mention de la délivrance du brevet:
10.04.91 Bulletin 91/15

(84) Etats contractants désignés:
BE CH DE ES FR GB IT LI NL

(56) Documents cités:
DE-A- 2 315 485
DE-B- 2 658 296

IBM TECHNICAL DISCLOSURE BULLETIN, vol.
27, no. 7A, décembre 1984, pages 3798-3799,
New York, US; M.J. LAWRENCE et al.: "Cable
management bracket assembly"

(73) Titulaire: **MARS-ACTEL Société Anonyme
dite:**
**25, Avenue Jean-Jaurès**
**F-08330 Vrigne-aux-Bois(FR)**

(72) Inventeur: **Molnar, Geza**
**11 rue de Grenet**
**Aiglemont F-08090 Charleville Mezieres(FR)**
Inventeur: **Yapoudjian, Claude**
**62 avenue Gabriel Péri**
**F-91420 Morangis(FR)**

(74) Mandataire: **Weinmiller, Jürgen et al**
**Lennéstrasse 9 Postfach 24**
**W-8133 Feldafing(DE)**

## Description

L'invention concerne un dispositif de maintien multiple notamment pour des faisceaux de fils dans un central téléphonique.

Un tel dispositif est plus généralement destiné à maintenir la position de plusieurs objets par rapport à une structure de support.

Cette structure de support est par exemple constituée par un profilé d'aluminium vertical comportant une rainure de retenue dont la section présente une forme en T pour pouvoir recevoir plusieurs dispositifs de fixation montés à des hauteurs différentes au dessus du sol.

On connait des dispositifs de maintien multiple comportant :

- un empilement d'étages de maintien se succèdant selon une direction d'empilement et s'étendant chacun selon une direction longitudinale une direction latérale,
- chacun de ces étages comportant des moyens de maintien pour recevoir l'un des dits objets à maintenir,
- un premier étage étant muni de moyens de fixation pour le fixer a ladite structure de support,
- et chaque étage ultérieur étant muni de moyen de liaison à l'étage précédent,

Dans ces dispositifs connus ces moyens de liaison entre étages successifs sont constitués par des vis. La réalisation de l'empilement prend alors un temps appréciable et nécessite de disposer d'un tournevis. Quant aux moyens de fixation du premier étage à la structure de support ils peuvent être de natures très diverses.

La présente invention a notamment pour but de permettre de réaliser l'empilement d'une manière plus simple et plus rapide que précédemment, tout au moins dans le cas où les charges supportées en service par cet empilement restent modérées.

Selon l'invention chaque dit étage comporte un bloc de liaison s'étendant d'une face de base à une face de sommet selon ladite direction d'empilement de manière que la face de base d'un étage suivant vienne s'appuyer sur la face du sommet d'un étage précédent,

- au moins chaque étage non extrême étant muni d'une tige de liaison s'étendant selon cette direction d'empilement et faisant saillie sur la dite face de base et/ou de sommet,
- au moins chaque étage non extrême comportant un logement de liaison s'étendant dans son bloc de liaison à partir de la dite face de sommet et/ou de base pour recevoir avec encastrement la tige de liaison qui fait saillie sur la face de base et/ou de sommet de l'étage suivant et/ou précédent, de manière à empêcher chaque étage de s'incliner, par rapport aux autres étages au moins par rotation autour d'axes selon les dites directions longitudinale et latérale,

- des saillies d'encliquetage étant ménagées selon une dite direction latérale ou longitudinale sur ladite tige de liaison ou dans le dit logement, ces saillies étant élastiquement rétractables pour permettre l'introduction de ladite tige de liaison dans ledit logement de liaison,
- et des logements d'encliquetage étant formés dans les parois dudit logement ou de ladite tige de liaison pour recevoir ladite saillie d'encliquetage lorsque cette tige est engagée à fond dans ce logement avec contact entre les faces de base et de sommet des étages consécutifs, de manière à s'opposer à une séparation de ces deux étages.

A l'aide des figures schématiques ci-jointes on va décrire ci-après, à titre d'exemple non limitatif, comment l'invention peut être mise en oeuvre. Il doit être compris que les éléments décrits et représentées peuvent, sans sortir du cadre de l'invention, être remplacés par d'autres éléments assurant les mêmes fonctions techniques. Lorsqu'un même élément est représenté sur plusieurs figures il y est désigné par le même signe de référence.

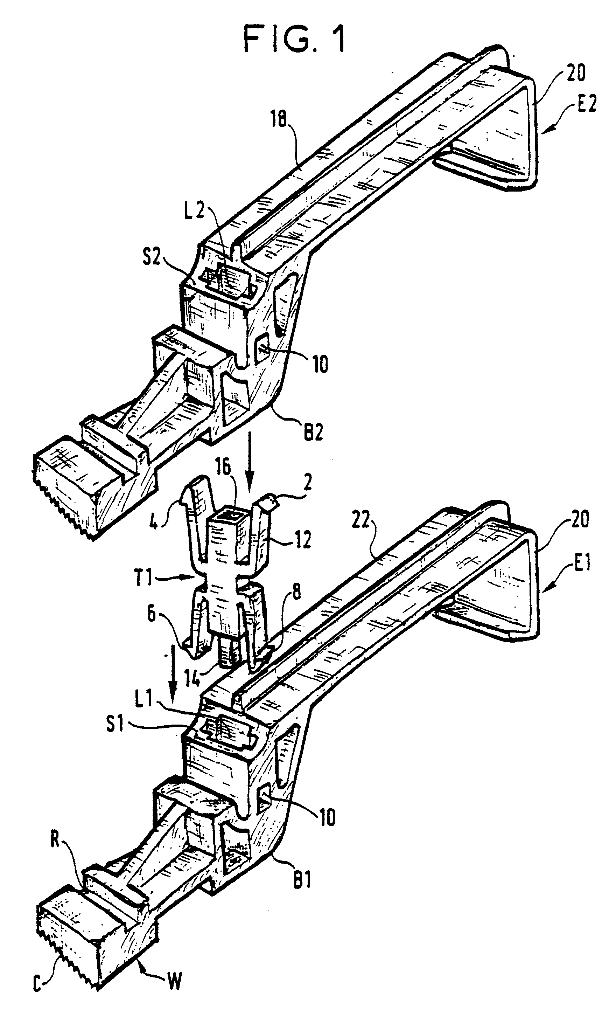

La figure 1 représente une vue en perspective de deux étages successifs d'un dispositif selon l'invention au cours du montage de ce dispositif.

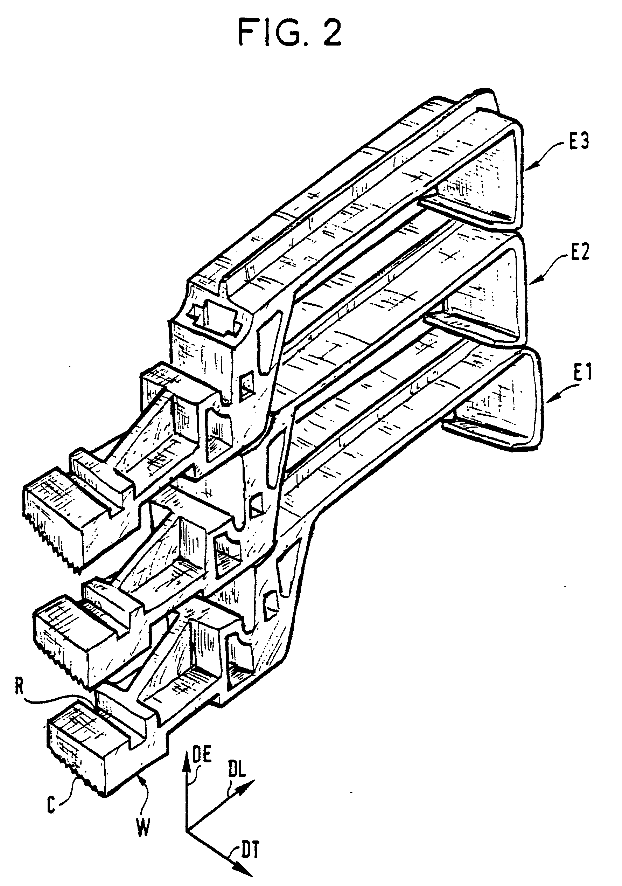

La figure 2 représente une vue partielle en perspective du même dispositif en service, la structure de support du premier étage et certains moyens de fixation n'étant pas représentés.

Dans le dispositif décrit à titre d'exemple les étages (E1, E2, E3) sont identiques afin de faciliter leur réalisation.

La structure de support du premier étage E1 n'est pas représentée. Elle est constituée d'un profilé s'étendant selon une direction DT et présentant une rainure en T. La fixation de ce premier étage est réalisée à l'aide de deux sabots coinceurs identiques.

L'un de ces sabots W seulement représenté. Il fait partie de l'étage E1 avec lequel il est moulé. Il présente une rainure R dans laquelle une des lèvres de la rainure du profilé vient se loger.

La face C opposée à cette rainure est inclinée, c'est-à-dire que l'épaisseur de matière sous cette rainure augmente quand on se rapproche de l'observateur selon la direction DT.

La rainure de l'autre sabot non représentée s'engage sur l'autre lèvre du profilé et les faces inclinées des deux sabots viennent en appui l'une sur l'autre. En poussant le sabot non représenté contre le sabot W selon la direction DT, on fait glisser ces deux surfaces inclinées l'une sur l'autre et on coince l'ensemble des deux sabots en compression entre les deux lèvres du profilé.

Bien entendu tous autres moyens de fixation connus pourraient être utilisés.

Selon l'invention, comme précédemment indiqué, et comme représenté sur les figures chaque étage comporte un bloc de liaison s'étendant d'une face base à une face de sommet selon la direction d'empilement de manière que la face de base d'un étage suivant vienne s'appuyer sur la face du sommet d'un étage précédent.

Chaque étage non extrême est muni d'une tige de liaison s'étendant selon la direction d'empilement et faisant saillie sur sa face de base et/ou de sommet.

De même, chaque étage non extrême comporte un logement de liaison s'étendant dans son bloc de liaison à partir de sa dite face de sommet et/ou de base pour recevoir avec encastrement la tige de liaison qui fait saillie sur la face de base et/ou de sommet de l'étage suivant et/ou précédent ; ceci empêche chaque étage de s'incliner, par rapport aux autres étages, au moins par rotation autour d'axes selon les directions longitudinale et latérale.

Des saillies d'encliquetage sont réalisées selon une direction latérale ou longitudinale sur la tige de liaison ou dans le logement, ces saillies sont élastiquement rétractables pour permettre l'introduction de cette tige de liaison dans le logement de liaison.

Des logements d'encliquetage sont formés dans les parois du logement ou de la tige de liaison pour recevoir la saillie d'encliquetage lorsque cette tige de liaison est engagée à fond dans le logement et qu'il y a contact entre les faces de base et de sommet deux étages consécutifs, ce qui permet d'éviter la séparation de ces étages.

Selon une disposition plus particulière les tiges de liaison sont séparables des étages et comportent les saillies d'encliquetage.

Chacune des tiges (T1) comporte, à chacune de ses extrémités, une paire de deux saillies d'encliquetage opposées, chaque logement de liaison (L1) présente la forme d'un canal de liaison traversant le bloc selon la direction d'empilement, une partie de la longueur de ce canal à partir de la face de base constituant un logement de liaison pour une tige de liaison provenant d'un étage précédent. Une partie de la longueur du canal (L1) à partir de la face de sommet (S1) constitue un logement de liaison pour une tige de liaison (T1) provenant d'un étage suivant (E2). Le bloc de liaison (B1, S1) est percé d'un canal d'encliquetage (10) dans une zone intermédiaire entre les faces de base (B1) et de sommet (S1) ; ce canal s'étend selon une direction transversale (DT) par rapport à la direction d'empilement (DE) et croise le canal de liaison (L1) pour y constituer les logements d'encliquetage.

La tige (T1) et le logement de liaison (L1, L2), présentent de préférence des sections polygonales complémentaires de manière à s'opposer à une rotation d'un étage (E2) autour d'un axe parallèle à la direction d'enfilement (DE).

Plus précisément et comme représenté, la tige de liaison (T1) présente une section sensiblement carrée et porte une paire de saillies d'encliquetage opposées (2,4) à au moins une de ses extrémités.

Chaque saillie (2) est portée à l'extrémité d'un bras flexible (12) qui s'étend selon la direction d'empilement (DE) à partir d'une zone médiane de la longueur de cette tige et qui est fixé à cette tige dans cette zone médiane, de manière à permettre à la saillie de se rétracter élastiquement. Chaque tige de liaison (T1) est munie, à l'une de ses extrémités, d'un prolongement axial (14) de dimensions transversales diminuées et elle est creusée à son autre extrémité d'un logement axial (16) pour recevoir le prolongement axial d'une tige de liaison adjacente.

Selon l'invention le moyen de maintien de chaque étage (E2) présente la forme d'un arceau (B2, S2, 18, 20). Cet arceau comporte une poutre d'arceau (18) s'étendant selon la direction longitudinale (DL) à partir d'une extrémité (S2) du bloc de liaison (B2, S2), un bras de fermeture d'arceau (20) s'étendant, selon la direction d'empilement à partir de l'extrémité de cette poutre, en regard de la longueur du bloc de liaison, afin que l'empilement desdits étages (E1, E2), forme une succession d'anneaux de maintien fermés. Chaque anneau (B2, S2, 18, 20, 22) est formé par le bloc de liaison (B2, S2), la poutre d'arceau (18) et le bras de fermeture d'arceau (20) d'un étage (E2) ainsi que par la poutre d'arceau (22) d'un étage adjacent (E1).

Le sabot W, c'est-à-dire les moyens de fixation (W) du premier étage (E1) portent cet étage par l'intermédiaire du bloc de liaison de celui-ci (B1, S1).

De préférence de dispositif est constitué par une matière plastique moulée ou injectée telle qu'une polyamide.

## Revendications

1. Dispositif de maintien multiple, notamment pour des faisceaux de fils dans un central téléphonique, ce dispositif étant plus généralement destiné à maintenir la position de plusieurs objets par rapport à une structure de support, ce dispositif comportant :
    - un empilement d'étages de maintien se succèdant selon une direction d'empilement (DE) et s'étendant chacun selon une direction longitudinale (DL) et une direction latérale (DT),

- chacun de ces étages comportant des moyens de maintien pour recevoir l'un des dits objets à maintenir,
- un premier étage étant muni de moyens de fixation pour le fixer a ladite structure de support,
- et chaque étage ultérieur étant muni de moyen de liaison à l'étage précédent,
- ce dispositif étant caractérisé par le fait que chaque dit étage (E1, E2) comporte un bloc de liaison (B1, S1, B2, S2) s'étendant d'une face base (B1, B2) à une face de sommet (S1, S2) selon ladite direction d'empilement (DE) de manière que la face de base (B2) d'un étage suivant (E2) vienne s'appuyer sur la face du sommet (S1) d'un étage précédent (E1),
- au moins chaque étage non extrême (E2) étant muni d'une tige de liaison (T1) s'étendant selon cette direction d'empilement et faisant saillie sur sa dite face de base (B2) et/ou de sommet,
- au moins chaque étage non extrême (E1) comportant un logement de liaison (L1) s'étendant dans son bloc de liaison (B1, S1) à partir de sa dite face de sommet (S1) et/ou de base pour recevoir avec encastrement la tige de liaison (T1) qui fait saillie sur la face de base (B2) et/ou de sommet de l'étage suivant (E2) et/ou précédent, de manière à empêcher chaque (E2) étage de s'incliner, par rapport aux autres étages (E1) au moins par rotation autour d'axes selon les dites directions longitudinale (DL)et latérale (DT),
- des saillies d'encliquetage (2, 4, 6, 8) étant ménagées selon une dite direction latérale (DT) ou longitudinale sur ladite tige de liaison (T1) ou dans le dit logement, ces saillies étant élastiquement rétractables pour permettre l'introduction de cette tige de liaison dans le logement de liaison (L1),
- et des logements d'encliquetage (10) étant formés dans les parois dudit logement (L1) ou de ladite tige de liaison pour recevoir ladite saillie d'encliquetage, lorsque cette tige (T1) est engagée à fond dans ce logement (L1) avec contact entre les faces de base (B2) et de sommet (S1) des étages consécutifs (E2, E1), de manière à s'opposer à une séparation de ces deux étages.

2. Dispositif selon la revendication 1, caractérisé par le fait que les dits étages (E1, E2, E3) sont identiques afin de faciliter leur réalisation.

3. Dispositif selon la revendication 1, caractérisé par le fait que les dites tiges de liaison (T1) sont séparables des dits étages (E1, E2) et comportent lesdites saillies d'encliquetage (2, 4, 6, 8) chacune de ces tiges (T1) comportant une paire de deux saillies d'encliquetage opposées (2, 4) à chacune de ses extrémités, chaque dit logement de liaison (L1) présentant la forme d'un canal de liaison traversant ledit bloc selon ladite direction d'empilement, une partie de la longueur de ce canal à partir de ladite face de base constituant un dit logement de liaison pour une tige de liaison provenant d'un étage précédent, une partie de la longueur de ce canal (L1) à partir de ladite face de sommet (S1) constituant un dit logement de liaison pour une tige de liaison (T1) provenant d'une étage suivant (E2).

4. Dispositif selon la revendication 3, caractérisé par le fait que ledit bloc de liaison (B1, S1) est percé, dans une zone intermédiaire entre les dites faces de base (B1) et de sommet (S1), d'un canal d'encliquetage (10) qui s'étend selon une direction transversale (DT) par rapport à ladite direction d'empilement (DE) et qui croise ledit canal de liaison (L1) pour constituer lesdits logements d'encliquetage de ce canal de liaison.

5. Dispositif selon la revendication 1, caractérisé par le fait que ladite tige (T1) et ledit logement de liaison (L1, L2), présentent des sections polygonales complémentaires de manière à s'opposer à une rotation d'un étage (E2) autour d'un axe parallèle à ladite direction d'enfilement (DE).

6. Dispositif selon la revendication 5, caractérisé par le fait que ladite tige de liaison (T1) présente une section sensiblement carrée et porte à au moins une de ses extrémités une paire de saillies d'encliquetage opposées (2, 4), chaque saillie (2) étant portée à l'extrémité d'un bras flexible (12) qui s'étend selon ladite direction d'empilement (DE) à partir d'une zone médiane de la longueur de cette tige et qui est fixé à cette tige dans cette zone médiane, de manière à permettre à cette saillie de se rétracter élastiquement.

7. Dispositif selon la revendication 3, caractérisé par le fait que chaque dite tige de liaison (T1) est munie, à l'une de ses extrémités d'un prolongement axial (14) de dimensions transversales diminuées, et est creusée, à son autre extrémité, d'un logement axial (16) pour recevoir le prolongement axial d'une tige de liaison adjacente.

8. Dispositif selon la revendication 1, caractérisé par le fait que les moyens de maintien de chaque étage (E2) présentent la forme d'un arceau (B2, S2, 18, 20) qui comporte une poutre d'arceau (18) s'étendant selon ladite direction longitudinale (DL) à partir d'une extrémité (S2) dudit bloc de liaison (B2, S2) et un bras de fermeture d'arceau (20) s'étendant, selon ladite direction d'empilement à partir de l'extrémité de cette poutre, en regard de la longueur dudit bloc de liaison, afin que l'empilement desdits étages (E1, E2), forme une succession d'anneaux de maintien fermés, chaque anneau (B2, S2, 18, 20, 22) étant formé par le bloc de liaison (B2, S2), la poutre d'arceau (18) et le bras de fermeture d'arceau (20) d'un étage (E2) et par la poutre d'arceau (22) d'un étage adjacent (E1).

9. Dispositif selon la revendication 1, caractérisé par le fait que lesdits moyens de fixation (W) du dit premier étage (E1) portent cet étage par l'intermédiaire du bloc de liaison de celui-ci (B1, S1).

10. Dispositif selon la revendication 2, caractérisé par le fait que chaque étage identique est constitué par une matière plastique moulée ou injectée telle qu'une polyamide.

## Claims

1. A multiple retaining device, in particular for retaining bundles of wires in a telephone exchange, said device being intended more generally for maintaining a plurality of objects in position relative to a supporting structure, and comprising:
   - a stack of retaining stages following one another in a stacking direction (DE) and each extending along a longitudinal direction (D) and a lateral direction (DT);
   - each of said stages including retaining means for receiving one of said objects to be retained,
   - a first stage being provided with fixing means for fixing it to said supporting structure, and
   - each subsequent stage being provided with link means for linking it to the preceding stage
   - characterized in that each of said stages (E1, E2) comprises a link block (B1, S1, B2, S2) extending from a base face (B1, B2) to a top face (S1, S2) along said stacking direction (DE) in such a manner that the base face (B2) of each succeeding stage (E2) bears against the top face (S1) of the preceding stage (E1),
   - at least each non-end stage (E2) being provided with a link rod (T1) extending along said stacking direction and projecting from said base face (B2) and/or from said top face,
   - at least each non-end stage (E1) including a link housing (L1) extending within its link block (B1, S1) from said top face (S1) and/or from said base face in order to receive and contain the link rod (T1) projecting from the base face (B2) and/or from the top face of the succeeding stage (E2) and/or of the preceding stage, in such a manner as to prevent each stage (E2) from sloping relative to the other stages (E1) at least by rotation about the axes of said longitudinal and lateral directions (DL, DT),
   - snap-fastening projections (2, 4, 6, 8) being provided along one of said lateral or longitudinal directions (DT, DL) on said link rod (T1) or in said housing, said projections being resiliently retractable in order to enable said link rod to be inserted in said link housing (L1), and
   - snap-fastening housings (10) being provided in the walls of said link housing (L1) or of said link rod intended to receive said snap-fastening projections when said rod (T1) is pushed home into said link housing (L1) with the base and top faces (B2, S1) of consecutive stages (E1, E2) coming into contact so as to oppose separation of said two stages.

2. A device according to claim 1, characterized in that said stages (E1, E2, E3) are identical in order to facilitate fabrication thereof.

3. A device according to claim 1, characterized in that said link rods (T1) are separable from said stages (E1, E2) and include said snap-fastening projections (2, 4, 6, 8) , with each of said rods (T1) including a pair of oppositely-directed snap-fastening projections (2, 4) at each of its ends, each of said link housings (L1) being in the form of a link channel passing through said block along said stacking direction, a portion of the length of said channel running from said base face constituting one of said link housings for a link rod coming from a preceding stage, a portion of the length of said channel (L1) running from said top face (S1) constituting one of said link housings for a link rod coming from a succeeding stage (E2).

4. A device according to claim 3, characterized in that said link block (B1, S1) has a snap-fastening channel (10) passing through a middle zone thereof between said base and top faces (B1, S1), said snap-fastening channel extending along a direction (DT) which is transverse to said stacking direction (DE) and which intersects said link channel (L1) in order to constitute said snap-fitting housings for said link channel.

5. A device according to claim 1, characterized in that said rod (T1) and said link housing (L1, L2) have complementary polygonal cross-sections so as to oppose the rotation of a stage (E2) about an axis parallel to said stacking direction (DE).

6. A device according to claim 5, characterized in that said link rod (T1) is of substantially square section and bears a pair of oppositely-directed snap-fastening projections (2, 4) at at least one of its ends, each projection (2) being carried at the end of a flexible arm (12) which extends along said stacking direction (DE) from a lengthwise middle zone of said rod and which is fixed to said rod in said middle zone, in such a manner as to enable said projection to be resiliently retracted.

7. A device according to claim, 3, characterized in that each of said link rods (T1) is provided at one of its ends with an axial extension (14) of smaller cross-sectional dimensions and has an axial bore (16) at its other end suitable for receiving the axial extension of an adjacent link rod.

8. A device according to claim 1, characterized in that the retaining means of each stage (E2) are in the form of a bow (B2, S2, 18, 20) comprising a bow beam (18) extending along the longitudinal direction (DL) from one end (S2) of said link block (B2, S2), and a bow closure arm (20) extending from the end of said beam along said stacking direction and facing the length of said link block in such a manner that a stack of said stages (E1, E2) forms a succession of closed retaining loops, with each loop (B2, S2, 18, 20, 22) being formed by the link block (B2, S2), the bow beam (18) and the bow closure loop (20) of one stage (E2) and by the bow beam (22) of an adjacent stage (E1).

9. A device according to claim 1, characterized in that the fixing means (W) of said first stage (E1) carry said stage via the link block thereof (B1, S1).

10. A device according to claim 2, characterized in that each identical stage is made of molded or injected plastic material such as a polyamide.

## Ansprüche

1. Mehrfachhalterungsvorrichtung, insbesondere für Drahtbündel in einer Telefonzentrale, wobei die Vorrichtung allgemeiner zur Lagesicherung mehrerer Gegenstände in einer Trägerstruktur bestimmt ist und aufweist:
   - einen Stapel von Halterungsstufen, die in Stapelrichtung (DE) aufeinanderfolgen und sich jeweils in einer Längsrichtung (DL) und in einer Seitenrichtung (DT) erstrecken,
   - wobei jede Stufe Halterungsmittel zur Aufnahme eines der zu halternden Gegenstände aufweist,
   - wobei eine erste Stufe mit Befestigungsmitteln zu ihrer Befestigung an der Halterungsstruktur versehen ist,
   - und jede folgende Stufe mit einem Mittel zum Befestigen an der vorhergehenden Stufe ausgestattet ist,
   - dadurch gekennzeichnet, daß jede Stufe (E1, E2) einen Verbindungsblock (B1, S1, B2, S2) aufweist, der sich in Stapelrichtung (DE) von einer Bodenfläche (B1, B2) bis zu einer Dachfläche (S1, S2) erstreckt, derart, daß sich die Bodenfläche (B2) einer nachfolgenden Stufe (E2) auf der Dachfläche (S1) einer vorhergehenden Stufe (E1) abstützt,
   - wobei mindestens jede nicht endseitigen Stufe (E2) mit einem Verbindungsstift (T1) ausgerüstet ist, der sich in Stapelrichtung erstreckt und der über seine zugehörige Bodenfläche (B2) und/oder Dachfläche vorspringt,
   - wobei mindestens jede nicht endseitige Stufe (E1) eine Verbindungsmulde (L1) aufweist, die sich in ihrem Verbindungsblock (B1, S1) von der Dachfläche (S1) und/oder der Bodenfläche ausgehend erstreckt und den über die Bodenfläche (B2) und/oder Dachfläche der nachfolgenden (E2) und/oder vorhergehenden Stufe vorspringenden Verbindungsstift (T1) aufnehmen soll, derart, daß jede Stufe (E2) daran gehindert wird, sich relativ zu anderen Stufen (E1) mindestens durch Drehen um die Achsen in der Längsrichtung (DL) und in der Seitenrichtung (DT) schräg zu stellen,

- wobei Einrastvorsprünge (2, 4, 6, 8) in Seitenrichtung (DT) oder in Längsrichtung am Verbindungsstift (T1) oder im Mulde geschaffen sind, die zum Einführen des Verbindungsstifts in die Verbindungsmulde (L1) elastisch auslenkbar ausgebildet sind, und

- wobei Einrastnuten (10) in den Wänden der Mulde (L1) oder des Verbindungsstifts zum Aufnehmen der Einrastvorsprünge gebildet sind, wenn der Stift (T1) voll in die Mulde (L1) bei sich berührenden Bodenflächen (B2) und Dachflächen (S1) der aufeinanderfolgenden Stufen (E2, E1) eingreift, so daß er sich einer Trennung der beiden Stufen widersetzt.

2. Vorrichtung nach Anspruch 1, dadurch gekennzeichnet, daß die Stufen (E1, E2, E3) gleich ausgebildet sind, um ihre Herstellung zu erleichtern.

3. Vorrichtung nach Anspruch 1, dadurch gekennzeichnet, daß die Verbindungsstifte (T1) von den Stufen (E1, E2) ablösbar sind und die Einrastvorsprünge (2, 4, 6, 8) aufweisen, wobei jeder Stift (T1) ein Paar von zwei einander gegenüberliegenden Einrastvorsprüngen (2, 4) an jedem seiner Enden besitzt, wobei jede Verbindungsmulde (L1) die Gestalt eines Verbindungskanals aufweist, der den Block in Stapelrichtung durchquert, wobei ein an der Bodenfläche beginnender Längsabschnitt dieses Kanals eine Kupplungsmulde für einen von der vorhergehenden Stufe ausgehenden Verbindungsstift bildet und wobei ein an der Dachfläche (S1) beginnender Längenabschnitt dieses Kanals (L1) eine Verbindungsmulde für einen zur nachfolgenden Stufe (E2) gehörenden Verbindungsstift (T1) bildet.

4. Vorrichtung nach Anspruch 3, dadurch gekennzeichnet, daß der Verbindungsblock (B1, S1) in einer mittleren Zone zwischen der Bodenfläche (B1) und der Dachfläche (S1) von einem Einrastkanal (10) durchdrungen ist, der sich relativ zur Stapelrichtung (DE) in Querrichtung (DT) erstreckt und den Verbindungskanal (L1) unter Bildung der Einrastmulde dieses Verbindungskanals kreuzt.

5. Vorrichtung nach Anspruch 1, dadurch gekennzeichnet, daß der Stift (T1) und die Verbindungsmulde (L1, L2) komplementäre, polygonale Querschnitte besitzen, derart, daß sie sich der Drehung einer Stufe (E2) um eine parallel zur Stapelrichtung (DE) verlaufende Achse widersetzen.

6. Vorrichtung nach Anspruch 5, dadurch gekennzeichnet, daß der Stift (T1) einen im wesentlichen quadratischen Querschnitt besitzt und an mindestens einem seiner Enden ein Paar von einander gegenüberstehenden Einrastvorsprüngen (2, 4) aufweist, wobei jeder Vorsprung (2) am Ende eines nachgiebigen Arms (12) angebracht ist, der sich, beginnend an einer mittleren Zone der Länge des Stifts, in Stapelrichtung (DE) erstreckt und in dieser mittleren Zone am Stift befestigt ist, derart, daß sich der Vorsprung elastisch zurückziehen kann.

7. Vorrichtung nach Anspruch 3, dadurch gekennzeichnet, daß der Verbindungsstift (T1) an einem seiner Enden mit einer axialen Verlängerung (14) mit verminderten Querabmessungen versehen ist und an seinem anderen Ende eine axiale Vertiefung (16) zur Aufnahme der axialen Verlängerung besitzt.

8. Vorrichtung nach Anspruch 1, dadurch gekennzeichnet, daß die Halterungsmittel jeder Stufe (E2) die Gestalt eines Bügels (B2, S2, 18, 20) besitzen, der einen Bügelpfosten (18), welcher sich an einem Ende (S2) des Verbindungsblocks (B2, S2) beginnend in Längsrichtung (DL) erstreckt und einen Bügelschließarm (20) aufweist, welcher sich gegenüber der Länge des Verbindungsblocks vom Ende des Pfostens ausgehend in Stapelrichtung erstreckt, so daß der Stapel der Stufen (E1, E2) eine Folge von geschlossenen Halterungsschlaufen bildet, wobei jede Schlaufe (B2, S2, 18, 20, 22) durch den Verbindungsblock (B2, S2), den Bügelpfosten (18) und den Bügelschließarm (20) einer Stufe (E2) sowie durch den Bügelpfosten (22) einer benachbarten Stufe (E1) gebildet wird.

9. Vorrichtung nach Anspruch 1, dadurch gekennzeichnet, daß die Befestigungsmittel (W) der ersten Stufe (E1) diese Stufe mit Hilfe des Verbindungsblocks (B1, S1) derselben halten.

10. Vorrichtung nach Anspruch 2, dadurch gekennzeichnet, daß jede gleiche Stufe aus Gieß- oder Spritzkunststoff, wie etwa ein Polyamid, besteht.

# FIG. 1

# FIG. 2